## Europäisches Patentamt
## European Patent Office
## Office européen des brevets

(19)

(11) Veröffentlichungsnummer : **0 033 768**
**B1**

(12) **EUROPÄISCHE PATENTSCHRIFT**

(45) Veröffentlichungstag der Patentschrift :
**23.05.84**

(51) Int. Cl.³ : **G 01 C   1/02**, G 01 D 11/30

(21) Anmeldenummer : **80107249.7**

(22) Anmeldetag : **20.11.80**

(54) **Flugbahnvermessungs- und Beobachtungstheodolit.**

(30) Priorität : **01.02.80 CH 830/80**

(43) Veröffentlichungstag der Anmeldung :
**19.08.81 Patentblatt 81/33**

(45) Bekanntmachung des Hinweises auf die Patenterteilung : **23.05.84 Patentblatt 84/21**

(84) Benannte Vertragsstaaten :
**AT BE CH DE FR GB IT LI NL SE**

(56) Entgegenhaltungen :
**CH-A-   488 166
FR-A- 1 574 309
US-A- 3 588 025
JORDAN/EGGERT/KNEISSL, HANDBUCH DER VER-
MESSUNGSKUNDE, Bd. III, 1956, S. 41-43**

(73) Patentinhaber : **CONTRAVES AG
Schaffhauserstrasse 580
CH-8052 Zürich (CH)**

(72) Erfinder : **Rösli, Walter
Brunnenwiesenstrasse 21
CH-8305 Dietlikon (CH)**

(74) Vertreter : **Althoff, Gerhard. et al
Patentanwälte H.Mitscherlich, K.Gunschmann
Dr.W.Körber, J.Schmidt-Evers Steinsdorfstrasse 10
D-8000 München 22 (DE)**

## Beschreibung

Die Erfindung bezieht sich auf einen Flugbahnvermessungs- und Beobachtungstheodolit, bestehend aus einem Stativteil und einem Messteil mit zwei im Abstand zueinander auf einem Jochelement angeordneten Gehäuseblöcken für die Lagerung optischer Geräte, insbesondere für ein Teleskop und ein Richtfernrohr, bei welchem Theodolit ein Stativelement des Stativteils zusammen mit dem Messteil in Bezug auf ein drehfest auf einem ortsfesten Fundament gelagertes Sokkelelement um eine senkrechte Azimut-Drehachse drehbar und das Teleskop mit dem Richtfernrohr um eine gemeinsame horizontale Elevations-Kippachse schwenkbar gelagert sind.

Bei einem Theodoliten der eingangs genannten Art — DE-C-1 772 521 — ist zum Horizontieren der Tragsäule und der auf der Tragsäule abgestützten, aus optischen Geräten bestehenden Präzisionswinkelmess-Einrichtung eine entsprechend ausgebildete und im wesentlichen in der Tragsäule angeordnete Einrichtung bekannt. Zur Grobhorizontierung der Tragsäule sind zwischen einem Stützring der Tragsäule und einem auf dem Fundament gelagerten Basisring drei am Umfang verteilt angeordnete Keile vorgesehen, welche von einem Schraubspindelantrieb betätigt werden. Die zur Abstützung der Winkelmess-Einrichtung ausgebildete Stirnebene der Tragsäule ist ebenfalls in die Horizontalebene nivellierbar. Hierzu ist der Zylindermantel der Tragsäule an drei Stellen durch einen linsenförmigen Spalt in zwei Wandhälften aufgespalten, welche unter Einwirkung eines die beiden Wandhälften durchdringenden Schraubenspindelantriebes gegen die federnde Rückstellkraft der Wandhälften zusammengepresst werden, wodurch die für die Nivellierung erforderliche vertikale Längenveränderung erreicht wird.

Die für die exakte Vermessung der Flugbahnen erforderliche Genauigkeit der Horizontierung von ± 1 Winkelsekunde erfordert teilweise eine nachträgliche, kostenaufwendige manuelle Nachbearbeitung der Stirnebene der Tragsäule, beispielsweise durch Schaben oder dergleichen. Die beschriebene Vorrichtung zum Horizontieren der Tragsäule mittels der Keile und zum Nivellieren der Horizontalebene für die Winkelmess-Einrichtung mittels der speziellen, in der Herstellung aufwendigen Wandhälften, hat aufgrund der auftretenden Verformungen einen begrenzten Anwendungsbereich.

Bekannt ist auch noch ein Beobachtungs- und Vermessungstheodolit (CH-A-488 166), welcher eine auf einem Sockel gelagerte Standsäule sowie einen auf der Standsäule gelagerten Tragring zur Aufnahme eines Gehäuses aufweist, wobei alle an oder in dem Gehäuse befestigten oder gelagerten Elemente zusammen mit dem angetriebenen Gehäuse um die senkrechte Mittelachse der Standsäule des Tragringes drehbar sind. Die Horizontierung der Standsäule sowie eine Nivellierung des die optischen Geräte tragenden Gehäuses ist in dieser Patentschrift nicht dargestellt und angesprochen.

Zum Stand der Technik ist ferner ein optisches Prüfgerät gemäss der US-A-3 588 025 zu erwähnen, bei welchem in einem Basiskörper ein mit einer inneren sphärischen Fläche versehenes Lagerelement und in dem Lagerelement ein mit einer korrespondierenden sphärischen Fläche versehenes und zur Aufnahme eines Spiegels ausgebildetes Gehäuse gelagert ist, wobei das Gehäuse mit dem Spiegel in dem Lagerelement justiert und mittels Schrauben in Bezug auf den Basiskörper fixiert werden kann.

Weiterhin ist ein mit mindestens drei Standfüssen versehenes Stativ bekannt (Jordan/ Eggert/Kneiße, Handbuch der Vermessungskunde, Band III, 1956, Seiten 41 bis 43), das zur Aufstellung von Theodoliten oder Tachymetern allgemeiner und leichterer Bauart dient und aus einem Stativteller, einem relativ zu diesem verschiebbaren Stativkopf mit Kugelzonen und einer relativ zu dem Stativkopf und somit auch zu dem Stativteller verschwenkbaren Aufnahmeplatte für das Instrument besteht. Bei diesem Stativ wird der Stativteller durch geeignete Aufstellung der Standfüsse grob horizontiert und danach durch eine kombinierte Verschiebe- und Schwenkbewegung die Aufnahmeplatte zusammen mit dem Instrument mittels einer Dosenlibelle horizontiert.

Aufgabe der Erfindung ist es, für einen Theodoliten der eingangs genannten Art, unter Beibehaltung der erforderlichen Ausricht-Genauigkeit von ± 1 Winkelsekunde, eine Vereinfachung der Horizontierung des Stativteils sowie eine im wesentlichen vom Stativteil unabhängige Nivellierung des Messteils in der Herstellung und Handhabung herbeizuführen, welche sowohl bei Theodoliten kleinerer und leichterer sowie bei Theodoliten grösserer und schwererer Bauart, zum Beispiel mit einem seitlich am Stativelement befestigten und um die senkrechte Achse drehenden Richterstand, Anwendung findet.

Gemäss der Erfindung wird diese Aufgabe dadurch gelöst, dass

a) das aus dem Sockelelement, dem Stativelement und einem Zwischenelement bestehende Stativteil mit einem in seinem Zentrum angeordneten und mit dem ihm wirkverbundenen Nivellier-Stativ eine Baueinheit bildet,

b) das Nivellier-Stativ mit dem einen Ende auf einem mit dem Fundament drehfest verbundenen Auflageelement gelagert und zum Ausrichten der senkrechten Azimut-Drehachse in Bezug auf das Auflageelement radial verstell- und feststellbar ist,

c) am anderen Ende des Nivellier-Stativs ein mit dem Zwischenelement des Stativteils drehfest verbundener Wälzlagerring auf einem mit dem Nivellier-Stativ drehfest verbundenen Basisring gelagert ist, und

d) das Messteil mit einem am Jochelement befestigten Stützkörper auf dem Wälzlagerring gelagert und zum Ausrichten der horizontalen Elevations-Kippachse in Bezug auf den Wälzlagerring radial verstell- und feststellbar ist.

Durch das getrennte Ausrichten der Azimut-Drehachse des als Baueinheit ausgebildeten Stativteils auf dem Auflageelement des Fundaments sowie der Elevations-Kippachse des ebenfalls als Baueinheit ausgebildeten Messteils auf dem Nivellier-Stativ des Stativteils in Form von radialem Verschieben wird eine entsprechend exakte und gut kontrollierbare Veränderung der Lage der Azimut-Drehachse sowie der Elevations-Kippachse erreicht.

Weiterbildungen der Erfindung sind Gegenstand der Unteransprüche.

Die Erfindung wird nachstehend an Hand der Zeichnung näher beschrieben. Es zeigt :

Figur 1 eine perspektivisch dargestellte Ansicht eines im wesentlichen aus einem Messteil und einem Stativteil bestehenden Theodoliten, bei welchem das Messteil in abgehobener Stellung zum Stativteil dargestellt ist,

Figur 2 eine in grösserem Massstab und teilweise im Schnitt dargestellte Ansicht des Theodoliten gemäss Fig. 1 in zusammengebautem Zustand,

Figur 3 einen im Schnitt dargestellten Ausschnitt der in Fig. 2 durch einen Kreis bezeichneten Stelle M der Lagerung des Messteils auf dem Stativteil,

Figur 3a die in grösserem Massstab und zerlegtem Zustand dargestellten Lagerelemente des Mess- und Stativteils,

Figur 4 die Lagerelemente gemäss Fig. 3 und Fig. 3a mit einer Justiereinrichtung zum Ausrichten des Messteils in Bezug auf das Stativteil,

Figur 5 einen im Schnitt dargestellten Ausschnitt der in Fig. 2 durch einen Kreis bezeichneten Stelle N der Lagerung und Justierung des Stativteils auf einem Fundament, und

Figur 5a die in grösserem Massstab und zerlegtem Zustand dargestellten Lagerelemente der Lagerung gemäss Fig. 5.

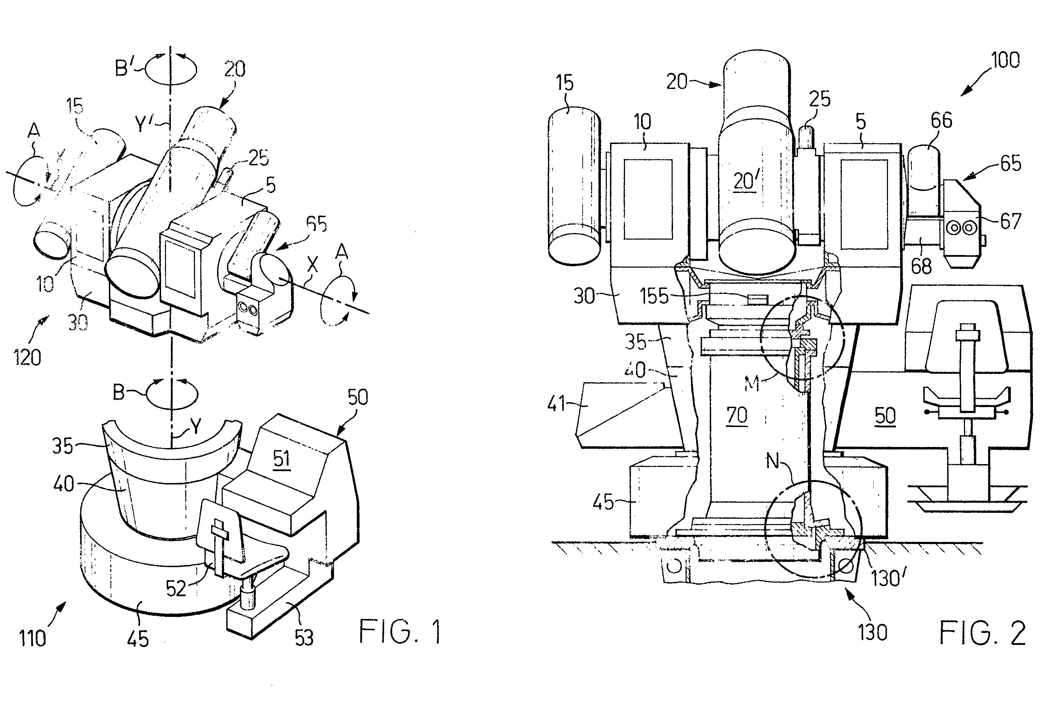

Fig. 1 zeigt eine perspektivische und Fig. 2 eine teilweise im Schnitt sowie in grösserem Massstab dargestellte Ansicht eines Flugbahnvermessungs- und Beobachtungstheodoliten, insbesondere eines Kinotheodoliten. Der im wesentlichen aus zwei Baueinheiten, einem Stativteil 110 und einem Messteil 120 bestehende Theodolit 100 ist in Fig. 1 in teilweise zerlegtem Zustand — Messteil 120 ist vom Stativteil 110 abgehoben — und in Fig. 2 in zusammengebautem Zustand dargestellt.

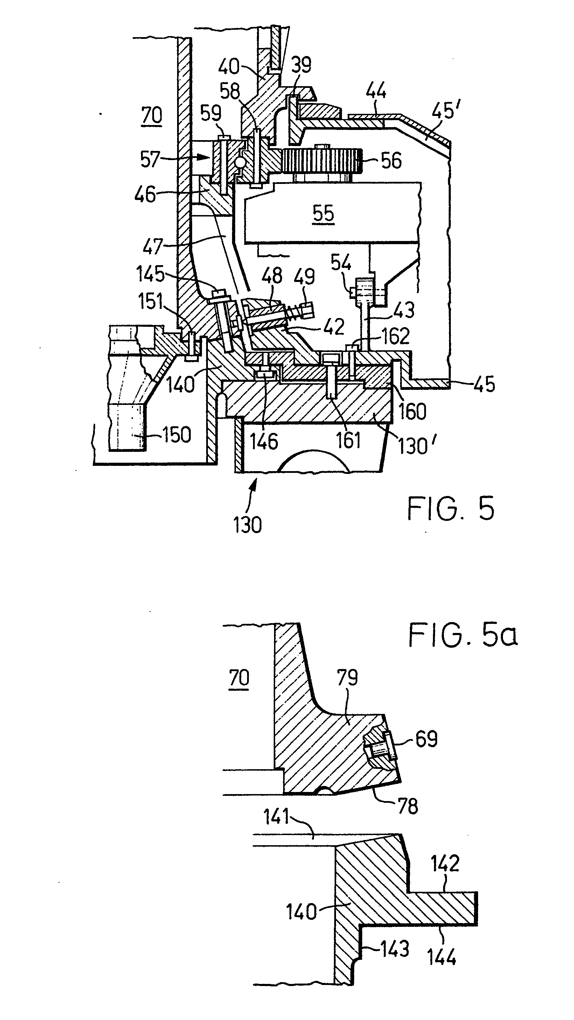

Das Stativteil 110 umfasst ein feststehendes Sockelelement 45, ein Stativelement 40 sowie ein Zwischenelement 35. Seitlich an dem Stativelement 40 ist ein im wesentlichen aus einem Bedienungspult 51, einem Sitz 52 und einer Fussplattform 53 bestehender Richterstand 50 angeordnet und mit nicht dargestellten Mitteln befestigt. Auf der dem Richterstand 50 gegenüberliegenden Seite ist an dem Stativelement 40 ein mit nicht dargestellten Mitteln befestigter Elektronikkasten 41 (nur in Fig. 2 dargestellt) vorgesehen. Zentrisch in dem Stativteil 110 ist ein als Standsäule ausgebildetes Nivellier-Stativ 70 angeordnet, welches sich im unteren Bereich mit einem entsprechend ausgebildeten und durch einen Kreis N näher bezeichneten Lager- und Stützpunkt auf einem Fundament 130 abstützt. Im oberen Bereich des Stativs 70 ist ein durch einen Kreis M näher bezeichneter Lager- und Stützpunkt für das Messteil 120 vorgesehen. Das Stativelement 40 mit dem Richterstand 50 ist in Bezug auf das feststehende Sockelelement 45 durch ein in Fig. 5 schematisch dargestelltes, vorzugsweise im Sockelelement 45 angeordnetes Antriebsaggregat 55 wie in Fig. 1 dargestellt um eine senkrechte Achse Y-Y′ in Pfeilrichtung B drehbar. Das Messteil 120 umfasst ein Jochelement 30 mit zwei im Abstand zueinander angeordneten Gehäuseblöcken 5 und 10, zwischen welchen ein Teleskop 20 gelagert ist. Seitlich an dem ersten Gehäuse 5 ist ein Richtfernrohr 65 angeordnet, welches im wesentlichen ein schwenkbares Objektiv 66, einen Okularkörper 67 sowie einen zur Aufnahme und Befestigung des Objektivs 66 beispielsweise U-förmig ausgebildeten und am Gehäuse 5 angeflanschten Tragkörper 68 aufweist. Das Richtfernrohr 65 ist dem auf dem Sitz 52 des Richterstandes 50 sitzenden Beobachter entsprechend zugeordnet.

Bei einem bevorzugten Ausführungsbeispiel ist seitlich an dem zweiten Gehäuse 10 des Messteils 120 ein optischer Empfänger beziehungsweise Sender 15 für IR-, Laser-, visible oder andere Strahlung vorgesehen. Ausserdem ist an dem Teleskoprohr 20′ auf der dem Gehäuse 5 zugewandten Seite in einer zum Teleskop 20 unveränderlichen Lage eine Fernsehkamera 25 angeordnet und befestigt. Die Steuerung der Zielverfolgung des Theodoliten 100 ist mittels der Signale aus der Fernsehkamera 25 oder aus einem der optischen Empfänger 15 erreichbar.

Der Empfänger beziehungsweise Sender 15, das Teleskoprohr 20′ mit der Kamera 25 sowie das zwischen den beiden Schenkeln des Tragkörpers 68 gelagerte, schwenkbare Objektiv 66 sind zusammen um eine horizontal orientierte Elevations-Kippachse, vorzugsweise um eine gemeinsame, horizontale Kippachse X-X schwenkbar. Ein in dem Gehäuse 10 angeordneter, nicht dargestellter Antriebsmechanismus bewirkt die Elevationsbewegung der Teile 15, 20, 25 und 66 um die Kippachse X-X in Pfeilrichtung A.

In zusammengebautem Zustand des Theodoliten 100 ist das komplette Messteil 120 mit dem Zwischenelement 35, dem Stativelement 40 und dem Richterstand 50 wie bereits erwähnt um die gemeinsame, senkrechte Azimut-Drehachse Y-Y′ des Messteils 120 und Stativteils 110 in Pfeilrichtung B,B′ drehbar, wobei die Drehbewegung B′ des Messteils 120 in Bezug auf die Drehbewegung B des Stativelements 40 mit dem Richterstand 50 vorzugsweise als Synchronbewegung erfolgt.

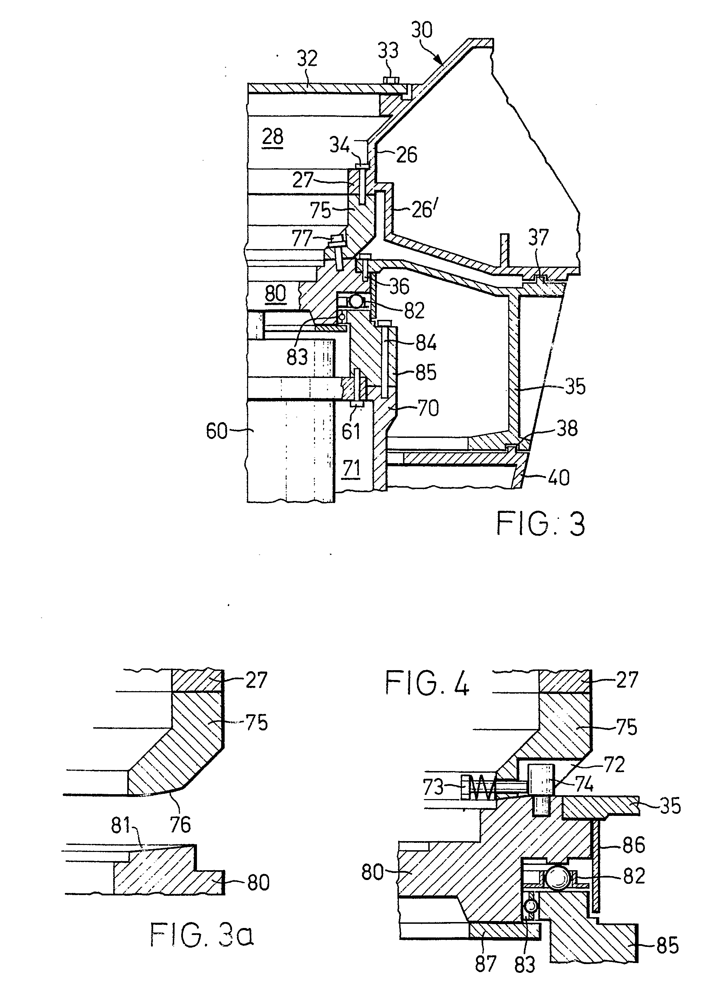

In Fig. 3 ist als Ausführungsbeispiel der in Fig. 2 durch den Kreis M bezeichnete Lager- und Stützpunkt des Messteils 120 auf dem Stativteil 110 in grösserem Massstab und im Schnitt dargestellt, welcher nachstehend näher beschrieben wird. Der Lager- und Stützpunkt umfasst im wesentlichen einen das Jochelement 30 tragenden und drehfest damit verbundenen Stützkörper 75, einen mit dem Zwischenelement 35 drehfest verbundenen Wälzlagerring 80 sowie einen mit dem Nivellier-Stativ 70 drehfest verbundenen Basisring 85.

Das gehäuseartig ausgebildete Jochelement 30 weist an der oberen Seite zur Aufnahme der beiden Gehäuseblöcke 5 und 10 je eine entsprechend ausgebildete, nicht näher dargestellte Auflagefläche auf und bildet im inneren Bereich einen durch eine Gehäusewand 26 begrenzten Hohlraum 28, welcher durch eine am Jochelement mittels Schrauben 33 lösbar befestigte Platte 32 verschlossen ist. An der Gehäusewand 26, 26' ist ein verstärktes, ringförmig ausgebildetes Flanschteil 27 vorgesehen, welches als Anlage und Befestigung des Jochelementes 30 auf dem Stützkörper 75 dient. Das Jochelement 30 ist auf dem Stützkörper 75 mittels um Umfang verteilt angeordneter Schrauben 34 befestigt, welche durch den Hohlraum 28 zugänglich sind. Der ringförmig ausgebildete und mit dem Jochelement 30 drehfest verbundene Stützkörper 75 ruht im wesentlichen auf dem Wälzlagerring 80, welcher mittels Schrauben 36 mit dem Zwischenelement 35 drehfest verbunden ist. Ferner sind durch am Umfang verteilt angeordnete Fixierschrauben 77 die beiden Teile 75 und 80 miteinander wirkverbunden. Zwischen dem Wälzlagerring 80 und dem Basisring 85 sind zur Abstützung der radialen und axialen Lagerkräfte schematisch dargestellte Kugelbahnen 82, 83 angeordnet, welche durch entsprechend zugeordnete und mit nicht dargestellten Mitteln befestigte Verkleidungsbleche 86, 87 gegen Verschmutzung weitgehend verschlossen sind. An dem mittels Schrauben 84 mit dem Nivellier-Stativ 70 drehfest verbundenen Basisring 85 ist im zylindrischen Innenraum 71 des Stativs 70 ein mit Schrauben 61 am Basisring befestigtes und zur Aufnahme eines nicht dargestellten Azimut-Antriebs ausgebildetes Gehäuse 60 angeordnet. Der in nicht näher dargestellter Weise mit dem Wälzlagerring 80 wirkverbundene Azimut-Antrieb bewirkt wie in Fig. 1 dargestellt im wesentlichen die Drehbewegung B' des Messteils 120 um die senkrechte Achse Y'. Das Joch-, Zwischen- und Stativelement sind wie in Fig. 3 schematisch dargestellt, jeweils mit einer einfach ausgebildeten Labyrinth-Dichtung 37 und 38 versehen.

In Fig. 3a ist je ein Teilstück des Stützkörpers 75 und Wälzlagerringes 80 dargestellt und man erkennt die mit einem vorzugsweise relativ gross (Grössenordnung ca. 200 cm) gewählten, auf der vertikalen Drehachse Y-Y' liegenden Radius sphärisch ausgebildete und dem Wälzlagerring 80 zugewandte Stützfläche 76 des Stützkörpers 75 sowie eine korrespondierende, als Innenkegel ausgebildete Auflagefläche 81 des Wälzlagerringes 80.

In Fig. 4 ist die Lagerung sowie eine Positionier-Einrichtung für den Stützkörper 75 auf dem Wälzlagerring 80 dargestellt und man erkennt das teilweise dargestellte Teilstück 27 des Jochelements 30, die Teile 75, 80 und 85, die beiden Kugelbahnen 82, 83 und ein Teilstück des Zwischenelements 35. Die Positionier-Einrichtung besteht im wesentlichen aus mindestens drei, vorzugsweise jedoch aus vier gleichmässig am inneren Umfang des Stützkörpers 75 verteilt angeordneten Stellschrauben 73 mit entsprechend zugeordneten Anschlagzapfen 74, welche in Ausnehmungen 72 des Stützkörpers angeordnet und im Wälzlagerring 80 in nicht dargestellter Weise befestigt sind. Das im wesentlichen mit dem am Jochelement 30 befestigten Stützkörper 75 auf dem Wälzlagerring 80 des Stativteils 110 aufgesetzte Messteil 120 wird in Bezug auf das Stativteil mittels der durch den Hohlraum 28 des Jochelements 30 zugänglichen und unter Federspannung stehenden Stellschrauben 73 ohne zusätzliche Hilfsmittel durch radiales Verschieben des mit der sphärisch ausgebildeten Stützfläche 76 versehenen Stützkörpers auf der kegelförmig ausgebildeten Auflagefläche 81 des Wälzlagerringes in relativ kurzer Zeit ausgerichtet und horizontiert sowie mittels der Schrauben 77 fixiert. Versuche haben ergeben, dass ohne besonderen Aufwand und ohne Nachbearbeitung der Stütz- und Auflagefläche durch Schaben oder dergleichen eine Ausrichtgenauigkeit von $\pm 1$ Winkelsekunde erreichbar ist.

In Fig. 5 ist als Ausführungsbeispiel der in Fig. 2 durch den Kreis N bezeichnete Lager- und Stützpunkt des Stativteils 110 auf dem Fundament 130 in grösserem Massstab und im Schnitt dargestellt und man erkennt das auf einem mit dem Fundamentring 130' wirkverbundenen Auflageelement 140 gelagerte Nivellier-Stativ 70, das Sockelelement 45 sowie das im Sockelelement angeordnete und schematisch dargestellte Antriebs-Aggregat 55, welches mittels Schrauben 54 an einem Steg 43 des Sockelelements 45 befestigt ist. Das Nivellier-Stativ 70 ist im unteren Bereich durch ein mittels Schrauben 151 am Stativ befestigtes Gehäuse 150 verschlossen. Das Gehäuse 150 dient ausserdem zur Zentrierung einer nicht dargestellten Verbindungswelle, welche mit einem in Fig. 2 schematisch dargestellten Winkelmess-Gerät 155 wirkverbunden ist.

Das gehäuseartig ausgebildete Sockelelement 45 weist einen ringförmigen Auflagesockel 46 auf, welcher zur Aufnahme eines Wälzlagers 57 ausgebildet ist. Das Wälzlager 57 ist mit dem Innenring durch Schrauben 59 an dem Auflagesockel 46 und mit dem Aussenring durch Schrauben 58 an dem Stativelement 40 befestigt. Der mit einer nicht näher dargestellten Verzahnung versehene Aussenring des Wälzlagers 57 steht mit einem Zahnritzel 56 in Wirkverbindung, welches von dem Antriebs-Aggregat 55 angetrieben wird. Das Antriebs-Aggregat 55 und das mit dem verzahnten Aussenring des Wälzlagers wirkverbundene Zahnritzel 56 bewirkt im wesentlichen die Drehbewegung des Stativelements 40 mit dem daran befestigten Richterstand 50 um die senkrechte Achse Y in Pfeilrichtung B. Das Stativelement 40 und Sockelelement 45 sind wie in Fig. 5 schematisch dargestellt, mit einer einfach ausgebildeten Labyrinth-Dichtung 39 versehen.

Das mit dem Nivellier-Stativ 70 durch Schrauben 145 verbundene Auflageelement 140 wird durch einen zugeordneten Klemmring 160 mit dem Fundamentring 130' des Fundaments 130 drehfest verbunden. Der Klemmring 160 ist mittels am Umfang verteilt angeordneter Schrauben 146 mit dem Auflageelement 140 sowie mittels Schrauben 161 mit dem Fundamentring 130' drehfest verbunden. Das Sockelelement 45 ist durch am Umfang verteilt angeordnete Schrauben 162 mit dem Klemmring 160 drehfest verbunden.

In Fig. 5a ist je ein Teilstück des im unteren Bereich als Fussteil 79 ausgebildeten Nivellier-Stativs 70 sowie ein Teilstück des vorzugsweise ringförmig ausgebildeten Auflageelements 140 in grösserem Massstab dargestellt. Das Fussteil 79 ist auf der dem Auflageelement zugewandten Seite mit einer sphärisch ausgebildeten Stützfläche 78 versehen, welche ebenfalls einen relativ gross (Grössenordnung ca. 200 cm) gewählten, auf der vertikalen Achse Y liegenden Radius aufweist. Das Auflageelement 140 ist auf der der Stützfläche 78 des Fussteils zugewandten Seite mit einer korrespondierenden, als Innenkegel ausgebildeten Auflagefläche 141 versehen. Ausserdem ist das Auflageelement 140 mit einer Auflagefläche 142 für den Klemmring 160 sowie mit einer dem Fundamentring 130' zugeordneten ringförmigen Zentrierfläche 143 und einer Auflagefläche 144 versehen.

Wie weiterhin in Fig. 5 dargestellt, sind im unteren Bereich des Sockelelements 45 mindestens drei gleichmässig, vorzugsweise jedoch vier gleichmässig am Umfang verteilt angeordnete Lageraugen 42 vorgesehen, in welchen je eine Buchse 48 angeordnet und befestigt ist. Die Buchse 48 dient zur Aufnahme einer Stellschraube 49, mittels welcher das auf der Auflagefläche 141 des Auflageelements 140 aufgesetzte Nivellier-Stativ 70 ausgerichtet wird. Die Stellschraube 49 stützt sich auf ein entsprechend zugeordnetes, seitlich im Fussteil 79 in nicht näher dargestellter Weise befestigtes Auflageteil 69 ab (Fig. 5, 5a).

Das mit der Stützfläche 78 des Fussteils 79 auf der Auflagefläche 141 des Auflageelements 140 aufgesetzte Nivellier-Stativ 70 des Stativteils 110 wird in Bezug auf des Fundament 130 beziehungsweise Auflageelement 140 mittels der durch im Sockelelement 45 vorgesehenen Oeffnungen 45' zugänglichen und unter Federspannung stehenden Stellschrauben 49 durch radiales Verschieben des mit der sphärisch ausgebildeten Stützfläche 78 versehenen Fussteils 79 auf der kegelförmig ausgebildeten Auflagefläche 141 des Auflageelements 140 ausgerichtet und horizontiert sowie mittels der durch Oeffnungen 47 zugänglichen Schrauben 145 auf dem Auflageelement fixiert.

Das Antriebs-Aggregat 55, die Schrauben 54, 161, 162, 145 und 58 sowie die Stellschrauben 49 sind durch die im Sockelelement 45 angeordneten Oeffnungen 45' und 47 zugänglich, wobei die Oeffnungen 45' durch die mit nicht näher dargestellten Mitteln an Sockelelement 45 befestigten Abdeckungen 44 verschlossen sind.

**Ansprüche**

1. Flugbahnvermessungs- und Beobachtungstheodolit (100), bestehend aus einem Stativteil (110) und einem Messteil (120) mit zwei im Abstand zueinander auf einem Jochelement (30) angeordneten Gehäuseblöcken (5, 10) für die Lagerung optischer Geräte, insbesondere für ein Teleskop (20) und ein Richtfernrohr (65), bei welchem Theodolit ein Stativelement (40) des Stativteils zusammen mit dem Messteil in Bezug auf ein drehfest auf einem ortsfesten Fundament (130) gelagertes Sockelelement (45) um eine senkrechte Azimut-Drehachse (Y-Y') drehbar und das Teleskop mit dem Richtfernrohr um eine gemeinsame horizontale Elevations-Kippachse (X-X) schwenkbar gelagert sind, dadurch gekennzeichnet, dass

a) das aus dem Sockelelement (45), dem Stativelement (40) und einem Zwischenelement (35) bestehende Stativteil (110) mit einem in seinem Zentrum angeordneten und mit ihm wirkverbundenen Nivellier-Stativ (70) eine Baueinheit bildet,

b) das Nivellier-Stativ (70) mit dem einen Ende auf einem mit dem Fundament (130) drehfest verbundenen Auflageelement (140) gelagert und zum Ausrichten der senkrechten Azimut-Drehachse (Y-Y') in Bezug auf das Auflageelement (140) radial verstell- und feststellbar ist,

c) am anderen Endes des Nivellier-Stativs (70) ein mit dem Zwischenelement (35) des Stativteils drehfest verbundener Wälzlagerring (80) auf einem mit dem Nivellier-Stativ (70) drehfest verbundenen Basisring (85) gelagert ist, und

d) das Messteil (120) mit einem am Jochelement (30) befestigten Stützkörper (75) auf dem Wälzlagerring (80) gelagert und zum Ausrichten der horizontalen Elevations-Kippachse (X-X) in Bezug auf den Wälzlagerring (80) radial verstell- und feststellbar ist.

2. Theodolit nach Anspruch 1, dadurch gekennzeichnet, dass das Nivellier-Stativ (70) an dem einen als Fussteil (79) ausgebildeten Ende mit einer dem Auflageelement (140) zugeordneten, sphärisch ausgebildeten Stützfläche (78) versehen ist (Fig. 5a).

3. Theodolit nach Anspruch 1 und 2, dadurch gekennzeichnet, dass das Auflageelement (140) eine der Stützfläche (78) des Nivellier-Stativs (70) zugeordnete Auflagefläche, vorzugsweise eine als Innenkegel ausgebildete Auflagefläche (141) aufweist (Fig. 5a).

4. Theodolit nach einem der Ansprüche 1 bis 3, dadurch gekennzeichnet, dass in dem feststehenden Sockelelement (45) mindestens drei, vorzugsweise jedoch vier gleichmässig am Umfang verteilt angeordnete Lageraugen (42) angeordnet sind, in welchen zur radialen Verstellung des Nivellier-Stativs (70) je eine auf das Fussteil (79) wirkende Stellschraube (49) angeordnet ist (Fig. 5).

5. Theodolit nach Anspruch 1, dadurch gekennzeichnet, dass an dem Jochelement (30) des Messteils (120) ein ringförmiger Stützkörper (75) befestigt ist, welcher eine dem Wälzlagerring (80) zugeordnete, sphärisch ausgebildete Stützfläche (76) aufweist (Fig. 3a).

6. Theodolit nach Anspruch 1 und 5, dadurch gekennzeichnet, dass der am anderen Ende des Nivellier-Stativs (70) angeordnete Wälzlagerring (80) eine der Stützfläche (76) des Stützkörpers (75) zugeordnete Auflagefläche, vorzugsweise eine als Innenkegel ausgebildete Auflagefläche (81) aufweist (Fig. 3a).

7. Theodolit nach einem der Ansprüche 1 und 5 bis 6, dadurch gekennzeichnet, dass in dem Stützkörper (75) mindestens drei, vorzugsweise jedoch vier gleichmässig am Umfang verteilt angeordnete und auf entsprechend im Wälzlagerring (80) befestigte Anschlagelemente (74) wirkende Stellschrauben (73) angeordnet sind (Fig. 4).

## Claims

1. Flight path measurement and observation theodolite (100), comprising a stand part (110), and a measuring part (120) having two housing blocks (5, 10) in spaced arrangement on a yoke element (30) for the mounting of optical devices, particularly for a telescope (20) and a telescopic sight (65), in which theodolite a stand element (40) of the stand part, together with the measuring part, are mounted in such a way as to be rotatable about a vertical azimuth axis of rotation (Y-Y') relative to a base element (45) in fixed mounting on a fixed foundation member (130), and the telescope with the telescopic sight are pivotally mounted about a common horizontal axis of elevation tilt (X-X), characterised in that

a) the stand part (110), comprising the base element (45), the stand element (40) and an intermediate element (35), forms a unit with a levelling stand (70) arranged in its centre and operatively connected to it,

b) the levelling stand (70) is mounted at one end on a bearing element (140) rigidly connected to the foundation member (130) and is radially adjustable and fixable for aligning the vertical azimuth axis of rotation (Y-Y') relative to the bearing element (140),

c) a roller bearing annulus (80) rigidly connected to the intermediate element (35) of the stand part is mounted on a base annulus (85) rigidly connected to the levelling stand (70) at the other end of the levelling stand (70), and

d) the measuring part (120) is mounted on the roller bearing annulus (80) with a support member (75) secured to the yoke element (30), and is radially adjustable and fixable for aligning the horizontal axis of elevation tilt (X-X) relative to the roller bearing annulus (80).

2. Theodolite according to claim 1, characterised in that the end of the levelling stand (70) designed as a pedestal (79) is provided with a spherical support surface (78) associated with the bearing element (140) (Fig. 5a).

3. Theodolite according to claims 1 and 2, characterised in that the bearing element (140) has a bearing surface associated with the support surface (78) of the levelling stand (70), preferably a bearing surface (141) designed as a cone interior (Fig. 5a).

4. Theodolite according to one of the claims 1 to 3, characterised in that at least three, but preferably four bearing lugs (42) are evenly and peripherally distributed in the fixed base element (45), in which lugs one adjusting screw (49) acting on the pedestal (79) is arranged in each case for the radial adjustment of the levelling stand (70) (Fig. 5).

5. Theodolite according to claim 1, characterised in that an annular support body (75) is secured to the yoke element (30) of the measuring part (120), which (75) has a spherical support surface (76) associated with the roller bearing annulus (80) (Fig. 3a).

6. Theodolite according to claims 1 and 5, characterised in that the roller bearing annulus (80) arranged on the other end of the levelling stand (70) has a bearing surface associated with the support surface (76) of the support body (75), preferably a bearing surface (81) designed as a cone interior (Fig. 3a).

7. Theodolite according to one of the claims 1 and 5 to 6, characterised in that at least three, but preferably four evenly and peripherally distributed adjusting screws (73) acting on stop elements (74) correspondingly secured in the roller bearingannulus (80) are arranged in the support body (75) (Fig. 4).

## Revendications

1. Théodolite de mesure de trajectoire aérienne et d'observation (100), composé d'une partie de pied (110) et d'une partie de mesure (120) avec deux blocs de boîtier (5, 10) prévus à une certaine distance l'un de l'autre sur un élément d'étrier (30) pour servir de paliers à des instruments d'optique notamment à un télescope (20) et à un tube de visée (65), théodolite dans lequel un élément de pied (40) de la partie de pied avec la partie de mesure est rotatif par rapport à un élément de socle (45) monté solidairement en rotation sur une fondation fixe (130), autour d'un axe de rotation d'azimut (Y-Y') vertical, et le télescope avec le tube de visée est monté basculant autour d'un axe de basculement d'élévation (X-X) horizontal, commun, caractérisé en ce que :

a) la partie de pied (110) qui se compose de l'élément de socle (45), de l'élément de pied (40) et d'un élément intermédiaire (35), forme une unité constructive avec le pied de mise à niveau (70) prévu en son centre et coopérant fonctionnellement avec celui-ci,

b) le pied de mise à niveau (70) est monté par une extrémité sur un élément d'appui (140) relié solidairement en rotation avec la fondation (130), et peut se régler radialement et se bloquer pour l'alignement de l'axe de rotation d'azimut (Y-Y') vertical, par rapport à l'élément d'appui (140),

c) à l'autre extrémité du pied de mise à niveau (70), une bague de palier de roulement (80) reliée solidairement en rotation à l'élément intermédiaire (35) de la partie de pied est montée sur une bague de base (85) reliée solidairement en rotation au pied de mise à niveau (70), et

d) la partie de mesure (120) est montée avec un corps d'appui (75) fixé sur l'élément d'étrier (30) sur la bague de palier de roulement (80) et peut se déplacer radialement et se bloquer par rapport à la bague de palier de roulement (80) pour l'alignement de l'axe de basculement en élévation (X-X), horizontal.

2. Théodolite selon la revendication 1, caractérisé en ce que le pied de mise à niveau (70) est muni à une extrémité réalisée sous la forme d'une partie de patte (79), d'une surface d'appui (78) de forme sphérique, associée à l'élément d'appui (140) (figure 5a).

3. Théodolite selon les revendications 1 et 2, caractérisé en ce que l'élément d'appui (140) comporte une surface d'appui associée à la surface d'appui (78) du pied de mise à niveau (70), surface d'appui (141) de préférence réalisée sous la forme d'un cône intérieur (figure 5a).

4. Théodolite selon l'une des revendications 1 à 3, caractérisé en ce que dans l'élément de socle fixe (45), on a au moins trois de préférence toutefois quatre œillets de palier (42), répartis régulièrement à la périphérie et dans lesquels il est prévu chaque fois une vis de réglage (49) agissant sur la partie de patte (79), pour le réglage radial du pied de mise à niveau (70) (figure 5).

5. Théodolite selon la revendication 1, caractérisé en ce que sur l'élément d'étrier (30) de la partie de mesure (120) est fixé un corps d'appui (75) de forme annulaire, qui comporte une surface d'appui (76) de forme sphérique associée à la bague de palier de roulement (80) (figure 3a).

6. Théodolite selon les revendications 1 et 5, caractérisé en ce que la bague de palier de roulement (80) prévue à l'autre extrémité du pied de mise à niveau (70) comporte une surface d'appui associée à la surface d'appui (76) du corps d'appui (75), surface d'appui (81) de préférence réalisée en forme de cône intérieur (figure 3a).

7. Théodolite selon l'une des revendications 1 et 5 à 6, caractérisé en ce que dans le corps d'appui (75), on a au moins trois de préférence toutefois quatre vis de réglage (73) réparties régulièrement à la périphérie et agissant sur des éléments de butée (74) fixés de façon correspondante sur la bague de palier de roulement (80) (figure 4).

FIG. 1

FIG. 2

0 033 768

FIG. 3

FIG. 4

FIG. 3a

FIG. 5

FIG. 5a